Europäisches Patentamt

European Patent Office

Office européen des brevets

(11) Publication number: 0 223 396
A1

# (12) EUROPEAN PATENT APPLICATION

(21) Application number: 86307810.1

(22) Date of filing: 09.10.86

(51) Int. Cl.4 C01B 33/28 , B01J 29/06 ,
//B01J29/28

(30) Priority: 18.10.85 US 789267

(43) Date of publication of application:
27.05.87 Bulletin 87/22

(84) Designated Contracting States:
BE DE FR GB IT NL SE

(71) Applicant: MOBIL OIL CORPORATION
150 East 42nd Street
New York New York 10017(US)
0

(72) Inventor: Chang, Clarence Dayton
11 Murray Place
Princeton New Jersey 08540(US)
Inventor: Hellring, Stuart Damon
29 Carlton Avenue
Trenton New Jersey 08618(US)

(74) Representative: Cooper, John Anthony et al
Mobil Court 3 Clements Inn
London WC2A 2EB(GB)

(54) Hydroxyl-rich zeolites and their preparation.

(57) Zeolites (e.g. ZSM-5 and zeolite beta) enriched with hydroxyl groups are prepared by ammonia treatment of zeolite which have suffered loss of tetrahedral aluminum from framework positions, followed by careful calcination at 200-450°C.

EP 0 223 396 A1

# HYDROXYL-RICH ZEOLITES AND THEIR PREPARATION

The invention relates to hydroxyl-rich zeolites and their preparation.

Naturally occurring and synthetic zeolites have been demonstrated to exhibit catalytic properties for various types of hydrocarbon conversions. Certain zeolites are ordered porous crystalline aluminosilicates having definite crystalline structure as determined by X-ray diffraction studies. Such zeolites have pores of uniform size which are uniquely determined by unit structure of the crystal. The zeolites are referred to as "molecular sieves" because interconnecting channel systems created by pores of uniform pore size allow a zeolite to selectively absorb molecules of certain dimensions and shapes.

The crystal lattice framework of these aluminosilicates can be described as a rigid three-dimensional framework of $SiO_4$ and $AlO_4$ in which the tetrahedra are cross-linked by the sharing of oxygen atoms whereby the ratio of the total aluminum and silicon atoms to oxygen atoms is 1:2. The electrovalence of the tetrahedra containing alumina is balanced by the inclusion in the crystal of a cation, for example an alkali metal, an alkaline earth metal or an organic cation. This cation may be exchanged entirely or partially with another type of cation utilizing ion exchange techniques in a conventional manner. By means of such cation exchange, it is possible to vary the properties of a given aluminosilicate by suitable selection of the cation.

The prior art describes a variety of synthetic zeolites. These zeolites have come to be designated by letter or other convenient symbols, as illustrated by zeolite A (United States Patent No. 2,882,243); zeolite beta (U.S. Patent No. 3,308,069 and Re 28341); zeolite X (United States Patent No. 2,882,244); zeolite Y (United States Patent No. 3,130, 007); zeolite ZK-5 (United States Patent No. 3,247,195); zeolite ZK-4 (United States Patent No, 3,314,752); zeolite ZSM-5 (United States Patent No, 3,702,886); zeolite ZSM-11 (United States Patent No. 3,709,979) and zeolite ZSM-23 (United States Patent No. 4,076,842).

The silicon/aluminum atomic ratio of a given zeolite is often variable. For example, zeolite X can be synthesized with silicon/aluminum atomic ratios of from 1 to 1.5, while that ratio in zeolite Y is from 1.5 to 3. In some zeolites, the upper limit of the silicon/aluminum atomic ratio is unbounded. ZSM-5 is one such example wherein the silicon/aluminum atomic ratio is at least 2.5 and up to infinity. United States Patent No. 3,941,871, reissued as RE. 29,948, discloses a porous crystalline silicate made from a reaction mixture containing no deliberately added aluminum and exhibiting the X-ray diffraction pattern characteristic of ZSM-5 zeolites.

Moreover, the silicon/aluminum atomic ratio of an "as-synthesized" zeolite can be altered, specifically increased, by decreasing its tetrahedral aluminum content either by specific post-synthesis treatment or by inherent loss of tetrahedral aluminum resulting from the process conditions to which the zeolite may be subjected during use. Process conditions which will effect depletion of tetrahedral aluminum include high temperature calcination and steaming. This loss of aluminum does not affect the crystallinity of zeolites, such as ZSM-5.

In accordance with the present invention it has now been found that zeolites which have undergone loss of tetrahedral aluminum can readily be converted to hydroxyl rich zeolites.

Accordingly, the invention resides in one aspect in a method of preparing a hydroxyl-rich zeolite comprising providing as a reactant, a zeolite which has suffered a loss of tetrahedral aluminum; subjecting the reactant zeolite to ammoniation; and subjecting the ammoniated zeolite to an elevated temperature treatment to remove ammonia from the zeolite without removing hydroxyl groups therefrom.

The production of hydroxyl groups in the zeolites subjected to treatment according to the method of the invention can be verified by IR spectroscopy. For example, creation of novel hydroxyl sites in ZSM-5 treated by the method of the invention is evident from the appearance of a new stretching band near $3720cm^1$ in the FTIR - (Fourier Transform Infrared) spectrum, whereas this IR band is not present in the zeolite prior to this treatment. Zeolite beta similarly shows a significantly increased absorbance of the existing $3745cm^{-1}$ stretching band. Here, the new hydroxyls are indistinguishable from the terminal silanols, and only an increased concentration is apparent.

The zeolite treated in accordance with the invention has suffered a loss of tetrahedral aluminum, for example, by high temperature (about 1000°C) calcination. Prior to such aluminum loss, the zeolite will be in the acid form which, provided the $SiO_2:Al_2O_3$ mole ratio of the zeolite is less than about 500:1 exhibits IR absorbance in the i.r. at $3610cm^{-1}$. With decreasing $SiO_2:Al_2O_3$ ratios the absorbance at $3610cm^{-1}$ increases. The Fourier Transform Infrared Spectrum of the zeolite used in the method of the invention exhibits no absorbance at $3610cm^{-1}$; that is, the FTIR spectrum of the zeolite shows complete loss of the bridging hydroxyl stretching band at about $3610cm^{-1}$ associated with the Bronsted acid sites of the zeolite. However, the FTIR spectrum of the zeolite reactant used in the present method exhibits absorbance at about $3745$ $cm^{-1}$ which is the characteristic stretching band of terminal silanols in a zeolite.

The zeolite used in the method of the invention preferably has a constraint index of 1 to 12 over the temperature range of 288 to 510°C (550°F to 950°F). The term "constraint index" is defined in, for example, U.S. Patent No. 4016218. Most preferably the zeolite employed is ZSM-5, which is described in U.S. Patent No. 3702886 or Re 29948 or is zeolite beta, which is described in U.S. Patent No. 3,308,069 and Re. 28,341.

The zeolite is initially subjected to loss of tetrahedral aluminum, for example, by high temperature calcination or steaming. The zeolite is then subjected to ammoniation preferably by contacting the zeolite with gaseous ammonia for 1 to 48 hours. An alternative, although less preferred, method is to contact the zeolite with an aqueous solution of $NH_4OH$ or an ammonium salt, including $NH_4OAc$, $NH_4Cl$ and $NH_4NO_3$, conveniently with the normality of the solution being 0.1N to 1N and with the contact time being from 1 to 24 hours. Whatever form of ammonia treatment is employed, it is important that water is present during the treatment. The water can be present on the zeolite, in the form of water vapor during treatment with gaseous ammonia, or as the solvent in treatment with an aqueous ammonium solution.

The ammonium-exchanged zeolite reactant is then subjected to a controlled elevated temperature treatment to desorb the ammonia without removing hydroxyl groups from the zeolite. The maximum temperature of this heat treatment should not exceed 450°C assuming the treatment is conducted at atmospheric pressure. Preferably the heat treatment is conducted at 200°C to 450°C under atmospheric pressure or is conducted under conditions equivalent to a heat treatment at 200°C to 450°C under atmospheric pressure.

During the elevated temperature treatment $NH_3$ is desorbed and hydroxyl-rich zeolites is produced. The production of a hydroxylated zeolite can be corroborated by FTIR and thermogravimetric analysis. However, the resultant hydroxyl groups are only stable to 500°C, and are are destroyed by reagents known to react with this type of functionality (e.g. $SiCl_4$ and $AlCl_3$).

The criticality of the upper limit of the temperature treatment is reflected by the fact that the newly created hydroxyl groups are destroyed, with water loss, if the hydroxylated zeolite is heated to 500°C. When ammonia is expelled below 450-500°C, a unique, sharp, stretching band remains near $3720cm^{-1}$ in the FTIR spectrum of ZSM-5. This band is associated with a novel hydroxyl moiety, and has not been reported previously. Heating to near 500°C causes a complete and rapid loss of these new hydroxyl groups. The rapid expulsion of water is observed as a major weight loss during thermogravimetric analysis (TGA). It is clear, therefore, that a unique zeolitic material is produced under the restricted conditions described herein. These novel hydroxyl-rich zeolitic materials are significant for several reasons. New silanols may be formed due to rehydration of strained siloxane bridges formed during framework dealumination. Alternatively, they may represent the hydration of extra-lattice aluminum. The former rationale appears more consistent with the observed FTIR absorbance near $3720cm^{-1}$ for ZSM-5, which is very near to other reported silanol stretching frequencies. Indeed, with zeolite beta the new absorbance actually overlaps with existing terminal silanols. Substitution of these hydroxyls, therefore, could render framework dealuminated zeolites more like that of as-synthesized materials, i.e. fewer defects. Parenthetically substitution of these hydroxyl groups can be undertaken, as previously indicated, by reaction of the hydroxyls of the hydroxyl-rich zeolite with $SiCl_4$ and $AlCl_3$.

In addition, the hydroxyl groups of inorganic matrices are generally believed to initiate crystallite growth of supported metals. That is, zeolites prior to use may be impregnated, ion exchanged or admixed with metal or metal derivatives, the metal being a promoter or accelerator for a hydrocarbon conversion in which the zeolite is be used. By way of example, reference is made to platinum impregnated, ion-exchanged or dispersed zeolites, in which the platinum is, e.g., a hydrogenation-dehydrogenation component. Agglomeration of platinum on zeolites, after use in hydrocarbon conversion processes is known. Since steamed or thermally treated zeolites are important candidates for metal supports, controlling the concentration of these new hydroxyls could have a major impact on the metal dispersion and redispersion properties of the zeolites.

It is readily apparent that these hydroxyl-rich zeolites may be employed in hydrocarbon conversion reactions and may be particularly useful in acid-catalyzed low temperature conversion of methanol to gasoline, in isomerization, e.g., of xylene containing feeds, in alkylation and disproportionation of aromatics and in olefin oligomerization, conducted at temperatures of ambient to 450°C, at pressures from subatmospheric to several hundred atmospheres, a liquid hourly space velocity between 0.1 and 10, and a hydrogen to hydrocarbon (feed) mole ratio of 0 to 20.

The invention will now be more particularly described with reference to the Examples and the accompanying drawings, in which:

Figure 1 is a Fourier Transform Infrared - (FTIR) spectrum of the calcined ZSM-5 of Example 1 prior to ammonia sorption;

Figure 2 is a FTIR spectrum of the calcined ZSM-5 of Example 1 following ammonia treatment and subsequent desorption;

Figures 3A and 3B are a weight loss derivative plots for the steamed and ammonia treated ZSM-5 of Example 1;

Figure 4 is a FTIR spectrum of the steamed ZSM-5 of Example 2 prior to ammonia treatment;

Figure 5 is a FTIR spectrum of the steamed ZSM-5 of Example 2 following ammonia treatment and subsequent desorption;

Figures 6A ad 6B are FTIR spectra of the calcined zeolite beta of Example 3 before and after ammonia treatment respectively;

Figures 7A and 7B are weight loss derivative plots for the steamed and ammonia treated zeolite beta of Example 4;

Figure 8 constitutes the FTIR spectra of a sample of Pt on steamed zeolite beta according to Example 5, in which curve A is the spectrum of the ammoniated, calcined sample; curve B is the spectrum of the sample after ammonia desorption at 400°C; and curve C is the spectrum of the sample B after dehydration at 500°C.

Figures 9A and 9B are weight loss derivative plots for the Pt on steamed zeolite beta of Example 5 after calcination and ammonia treatment.

Figure 10A is the FTIR spectrum of the hydroxyl-rich ZSM-5 of Example 7 without SiCl₄ treatment; Figure 10B is the FTIR spectrum of the sample used in Figure 10A but after treatment with SiCl₄ at 100°C; Figure 10C is the FTIR spectrum of the sample of Figure 10A after treatment with SiCl₄ at 200°C.

Figure 11A is a FTIR spectra of hydroxyl-rich ZSM-5 of Example 8 without AlCl₃ treatment and Figure 11B is the FTIR spectrum of the hydroxyl-rich ZSM-5 after AlCl₃ treatment.

## EXAMPLES

### EXAMPLE 1:

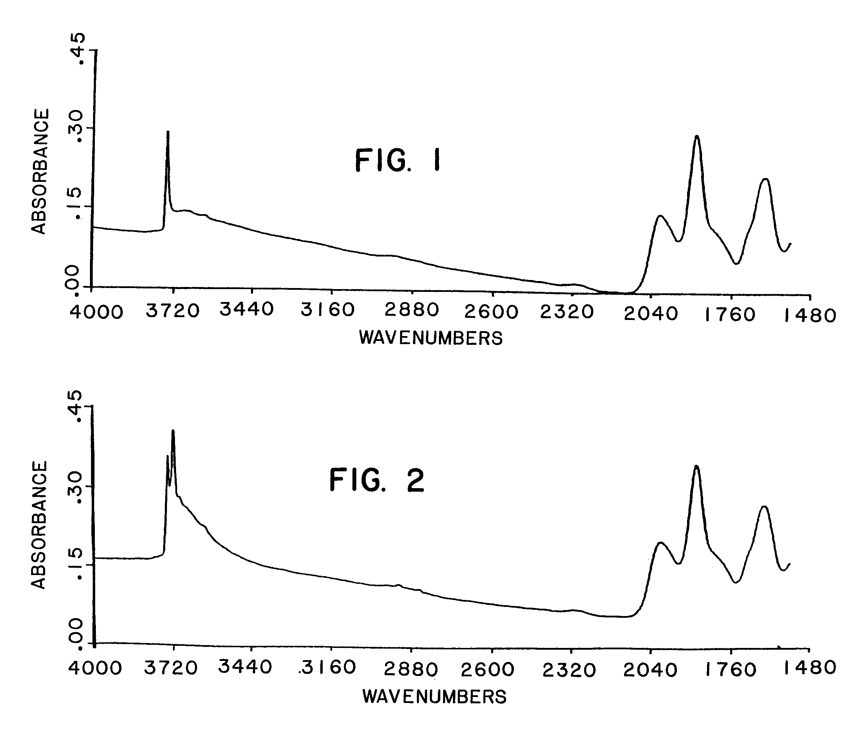

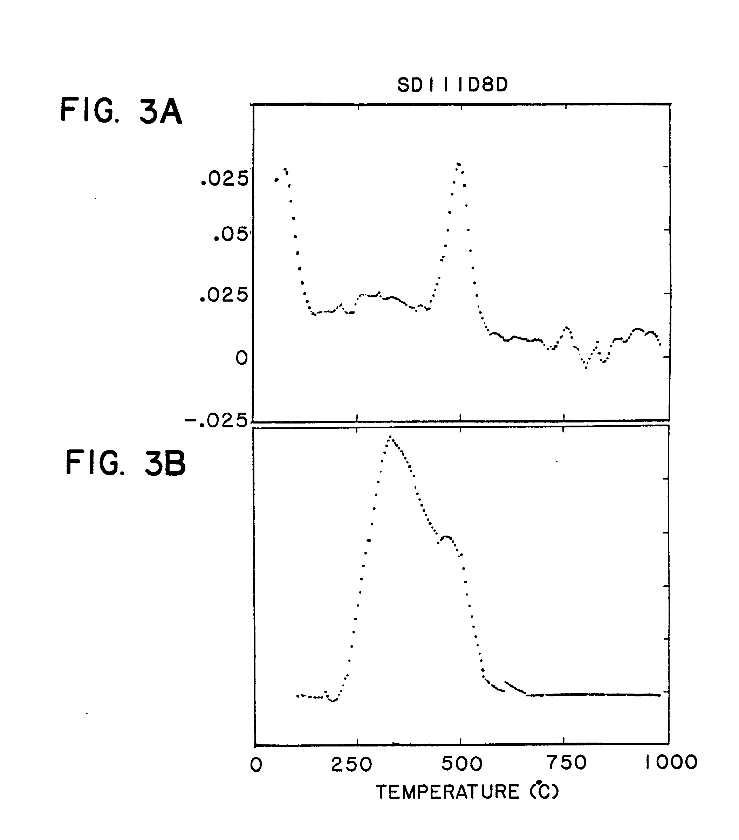

ZSM-5 ($SiO_2/Al_2O_3 = 70$) was calcined at high temperature (1000°C, 60 min) in an atmosphere of nitrogen. The FTIR spectrum was then run at ambient temperature (about 25°C) and showed complete loss of the bridging hydroxyl stretching band ($3610cm^{-1}$) associated with the Bronsted acid sites of zeolites (Figure 1). Only the terminal silanol stretching band ($3745cm^{-1}$) remained. The calcined sample was then treated with gaseous ammonia at ambient temperature in the presence of atmospheric humidity. The resulting ammoniated zeolite - (approx. 0.10 meq NH3/gm of ash) was desorbed in vacuo (400°C, $10^{-1}$ torr) prior to spectral analysis. The FTIR spectrum (Figure 2) at 25°C showed an entirely new hydroxyl stretching band at $3720\pm5cm^{-1}$ ($3721cm^{-1}$ on Figure 2). Increasing the sample temperature to 500°C caused the rapid disappearance of the new band. TGA/TPAD - (temperature programmed ammonia desorption) analysis showed a major weight loss ($T_{max} = 500°C$, Figure 3A) corresponding to dehydration at a temperature well above that for ammonia desorption - ($T_{max} = 290°C$, Figure 3B).

### EXAMPLE 2:

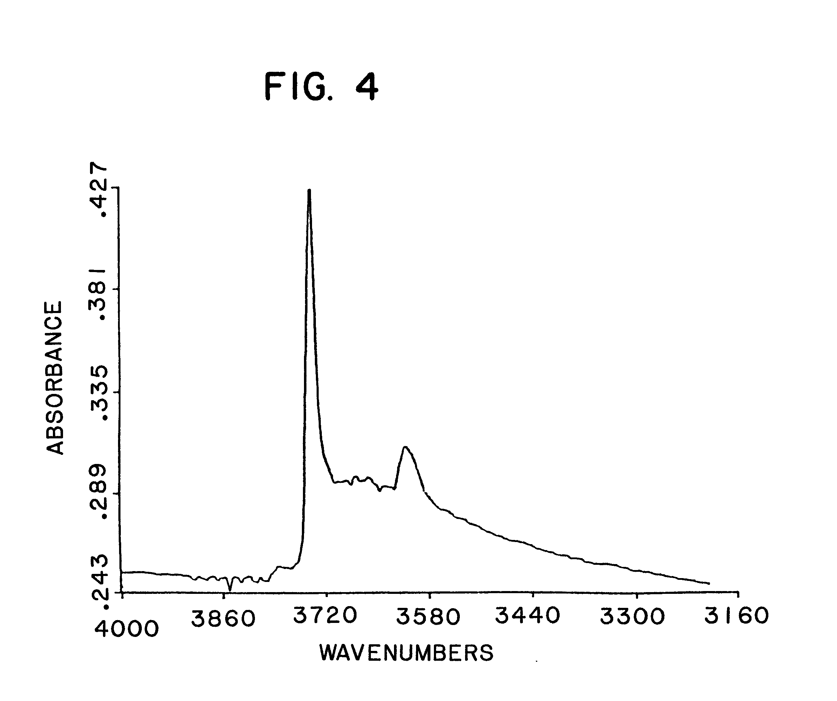

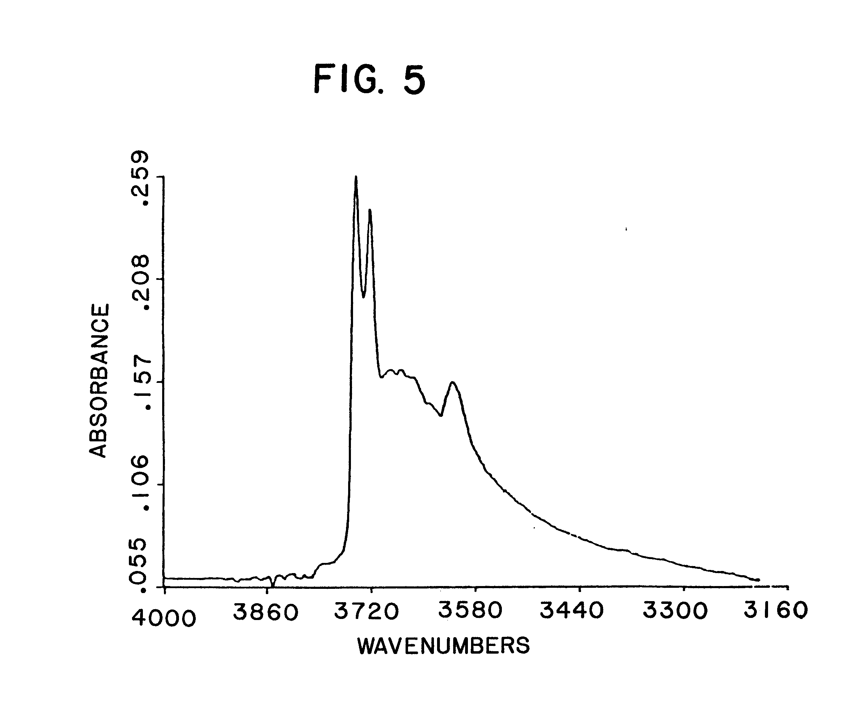

A sample of ZSM-5 was steam calcined - (538°C, 1 atm of steam, 6 hr), and showed a decreased bridging hydroxyl stretch ($3610cm^{-1}$) in the FTIR spectrum at 250°C (Figure 4). Ammoniation and calcination (as above) again provided a material with new hydroxyl groups absorbing near $3720cm^{-1}$ (Figure 5) in the FTIR spectrum of 25°C. The thermal stability and tpad profile of this sample was consistent with that of Example 1.

### EXAMPLE 3:

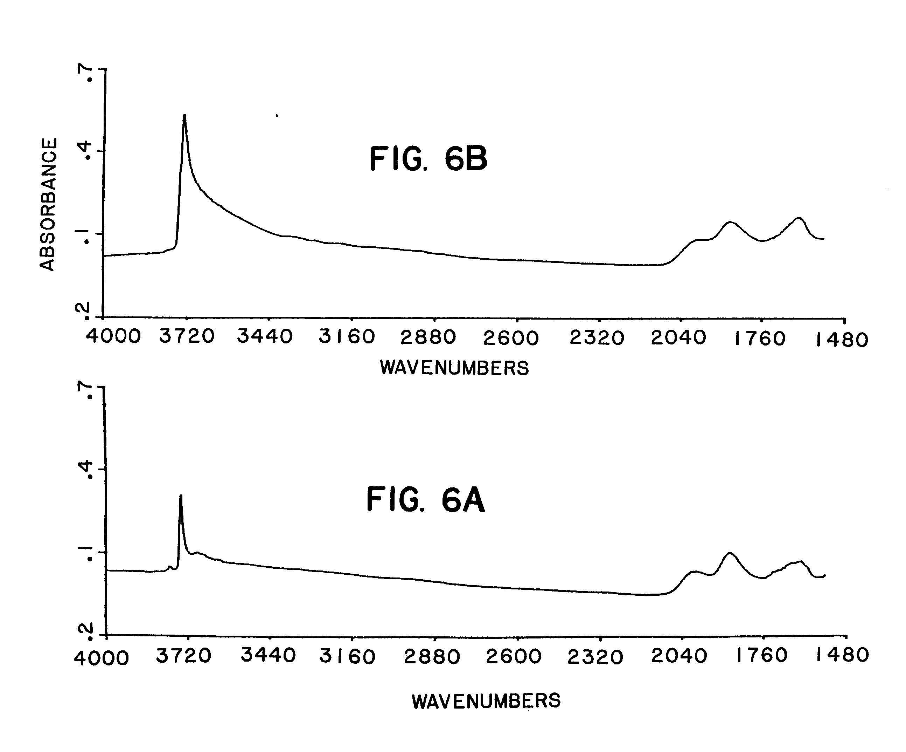

A sample of zeolite beta ($SiO_2/Al_2O_3 =$ about 40) was calcined at high temperature under a nitrogen atmosphere (850°C, 0.5h) and its FTIR spectrum was run at 25°C (Figure 6A). After treatment with ammonia gas and desorption (as above) the FTIR spectrum at 25°C showed an enhanced absorbance band at about $3745cm^{-1}$ (Figure 6B). Though indistinguishable from the existing terminal silanol stretching frequency, increased concentration of hydroxyl groups in the ammoniated and desorbed sample may be deduced from increased absorbance by the Beers-Lambert Law.

### EXAMPLE 4:

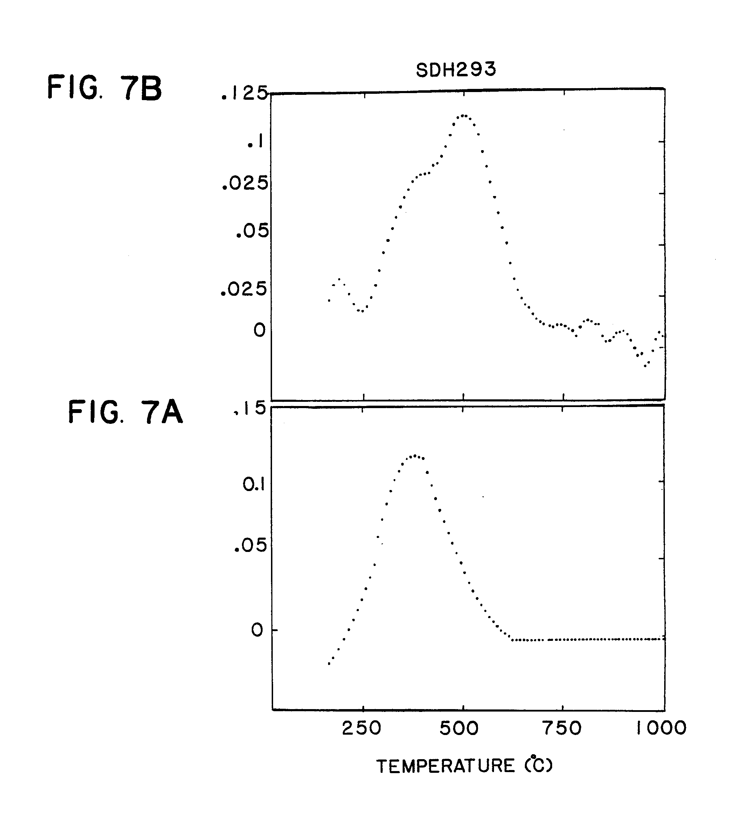

A sample of zeolite beta which had been steam calcined (500°C, 1 atm of steam, 16 hr) was ammoniated and desorbed as above. TGA/TPAD data (Figure 7) again showed rapid dehydration of the hydroxyl-rich material when heated to 500°C.

## EXAMPLE 5:

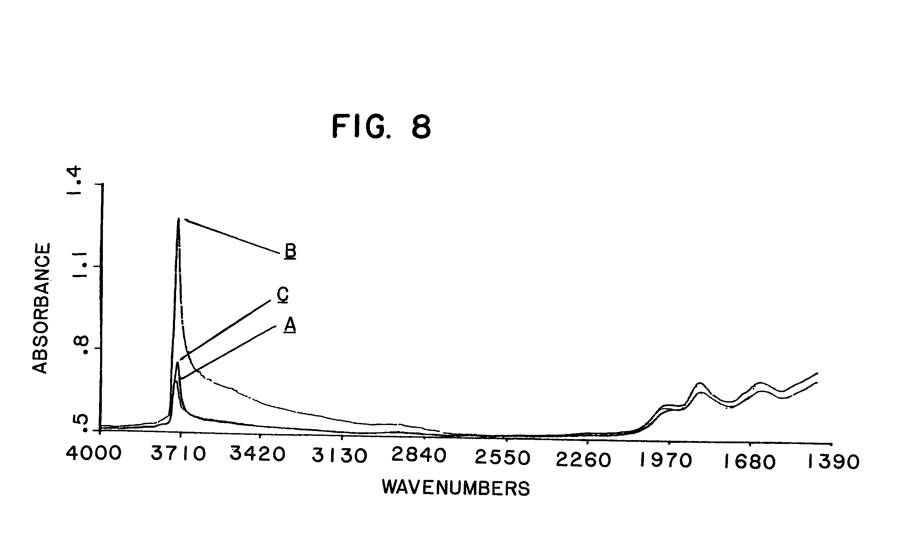

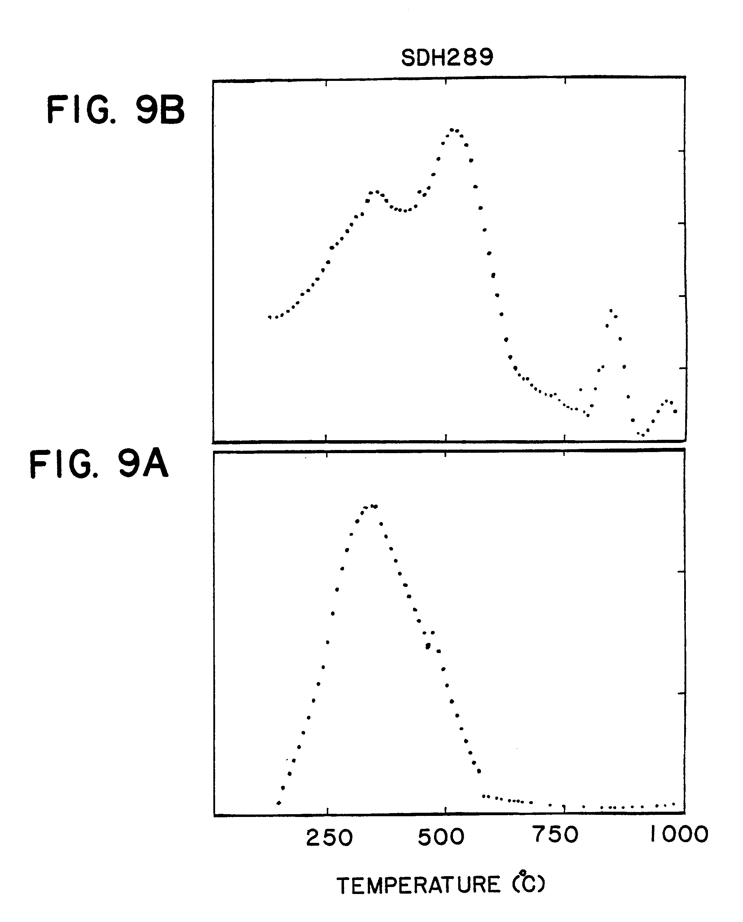

A sample of platinum on steamed zeolite beta - (500°C, 1 atm of steam, 16 hr), which had been calcined to 500°C during $H_2$ sorption studies, was treated with ammonia gas as described above. Following desorption at 400°C ($10^{-5}$torr), the FTIR spectrum was run at 25°C and showed an increase in the 3745cm$^{-1}$ hydroxyl band (Figure 8). The enhanced absorbance intensity diminished rapidly when the temperature was raised to 500°C. The TGA/TPAD profiles (Figure 9) showed weight losses at Tmax = 290°C (corresponding to ammonia desorption), Tmax = 500°C (corresponding to dehydration of the hydroxyls observed by FTIR), and Tmax = 850°C. The latter weight loss of a non-basic substance, presumably water, is apparently due to the presence of platinum, since it was not observed with the pure zeolite.

## EXAMPLE 6:

The thermally treated ZSM-5 sample of example 1 was exchanged with aqueous ammonium nitrate (1M) at room temperature (1hr). FTIR spectral analysis and thermal data were identical to those described for example 1.

## EXAMPLE 7:

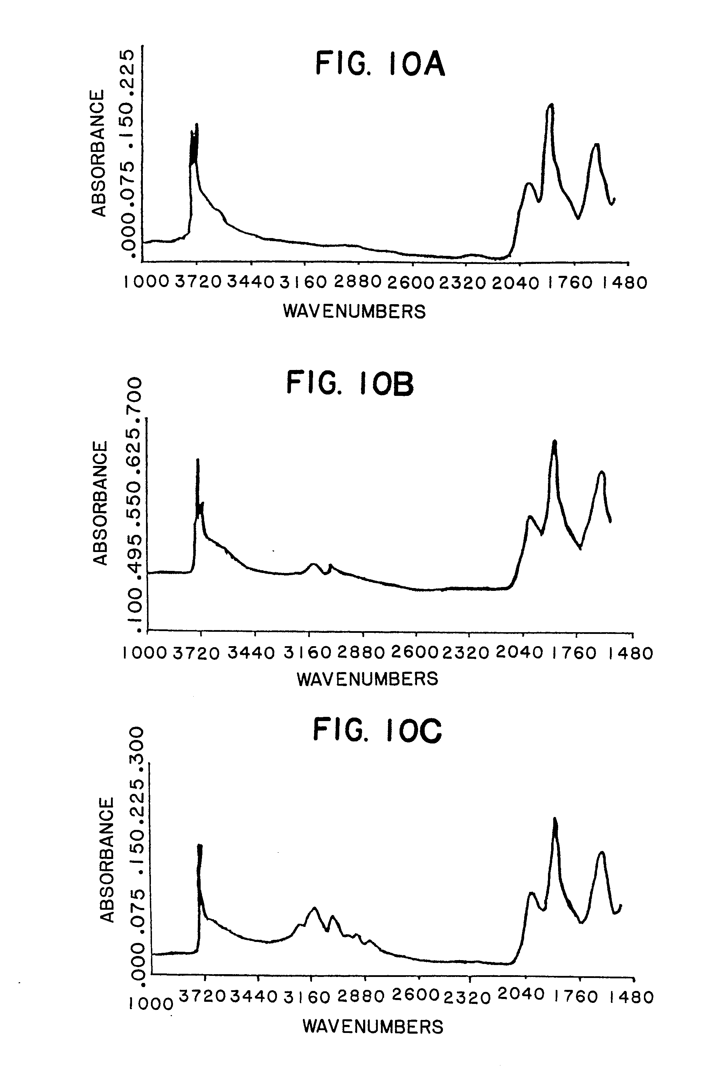

Calcined ZSM-5 (example 1) was treated with ammonia gas, then desorbed at 400°C (1 hr) under a stream of dry argon. The hydroxyl-rich sample was then treated with tetrachlorosilane carried in argon (100°C, 1-1.25 hr). Excess silane was removed by flushing with argon overnight. The silylated material was again treated with ammonia to regenerate any remaining hydroxyls. The identical procedure was followed with another sample, but the silylation temperature was increased to 200°C. Analysis of FTIR spectra of these samples at 25°C (Figure 10) revealed that destruction of these new hydroxyls had resulted from the silane treatment. Furthermore, the extent to which hydroxyl concentration was reduced increased with temperature.

## EXAMPLE 8:

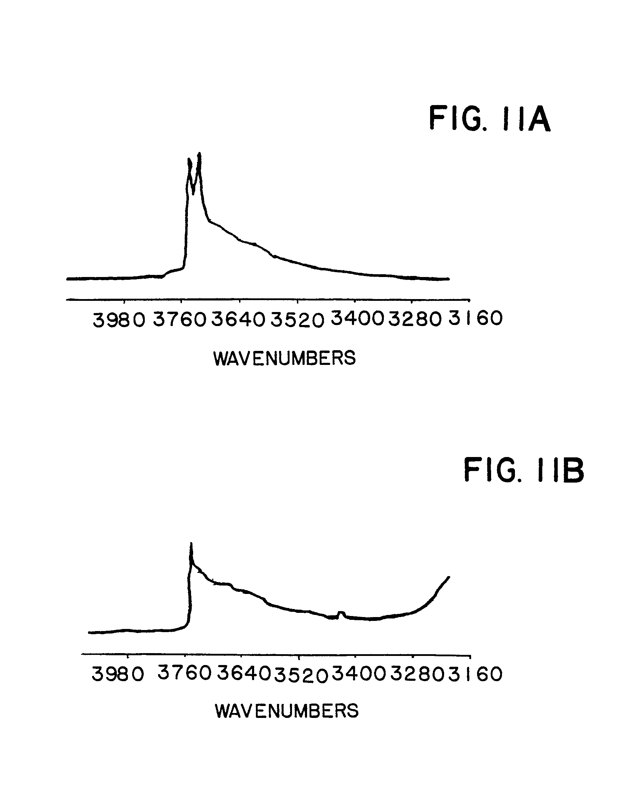

Thermally treated ZSM-5 (as in example 1) was treated with ammonia gas, then desorbed in a stream of dry argon (400°C, 1 hr). The hydroxyl-rich sample was subjected to of aluminum trichloride vapor (1gm/gm of zeolite) in an argon carrier gas (400°C, 3 passes, 0.5 hr each). Excess aluminum chloride was expelled by raising the reactor temperature (500°C, 1 hr). The sample was again ammoniated to regenerate any remaining hydroxyl groups. FTIR spectral analysis at 25°C following ammonia desorption (400°C, $10^{-5}$ torr) (Figure 11) revealed that the AlCl$_3$ treatment had substantially decreased the concentration of the new hydroxyl groups.

## Claims

1. A method of preparing a hydroxyl-rich zeolite comprising providing as a reactant, a zeolite which has suffered a loss of tetrahedral aluminum; subjecting the reactant zeolite to ammoniation; and subjecting the ammoniated zeolite to an elevated temperature treatment to remove ammonia from the zeolite without removing hydroxyl groups therefrom.

2. The method of Claim 1, wherein the ammoniation is conducted in the presence of water. .

3. The method of Claim 1 or Claim 2 wherein said elevated temperature treatment is effected at 200°C to about 450°C.

4. The method of any preceding Claim wherein said reactant zeolite is characterized by a constraint index within the approximate range of about 1 to about 12 measured at 288 to 510°C.

5. The method of any preceding claim wherein said zeolite is ZSM-5.

6. The method of one of Claims 1 to 4 wherein said zeolite is zeolite beta.

7. A zeolite exhibiting the X-ray diffraction pattern of ZSM-5, having suffered loss of framework aluminum, the Fourier Transform Infrared Spectrograph of which exhibits absorbance at about 3720±5cm$^{-1}$.

FIG. 1

FIG. 2

WAVENUMBERS

ABSORBANCE

.45  .30  .15  .00

4000  3720  3440  3160  2880  2600  2320  2040  1760  1480

SD I I I D8D

FIG. 3A

.025

.05

.025

0

-.025

FIG. 3B

0          250          500          750          1000

TEMPERATURE (°C)

# FIG. 4

# FIG. 5

0 223 396

FIG. 6B

FIG. 6A

FIG. 7B

SDH293

FIG. 7A

TEMPERATURE (°C)

FIG. 8

FIG. 9B

SDH289

FIG. 9A

TEMPERATURE (°C)

FIG. 10A

FIG. 10B

FIG. 10C

FIG. IIA

3980 3760 3640 3520 3400 3280 3160

WAVENUMBERS

FIG. IIB

3980 3760 3640 3520 3400 3280 3160

WAVENUMBERS

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 444 900 (C.D. CHANG) | | C 01 B 33/28 <br> B 01 J 29/06 // <br> B 01 J 29/28 |
| | --- | | |
| A | EP-A-0 148 626 (H. TOPSOE A/S) | | |
| | --- | | |
| A | US-A-3 644 200 (D.A. YOUNG) <br> * Column 4 * | | |
| | --- | | |
| A | EP-A-0 134 330 (MOBIL OIL) | | |
| | --- | | TECHNICAL FIELDS SEARCHED (Int. Cl.4) |
| A | US-A-3 404 086 (C.J. PLANK) | | |
| | ----- | | B 01 J 29/00 |

The present search report has been drawn up for all claims

| Place of search | Date of completion of the search | Examiner |
|---|---|---|
| THE HAGUE | 05-03-1987 | DEVISME F.R. |